# EUROPÄISCHE PATENTANMELDUNG

(11) **EP 1 693 738 A1**
(43) Veröffentlichungstag der Anmeldung: **23.08.2006**
(21) Anmeldenummer: 05003339.8
(22) Anmeldetag: 16.02.2005
(51) Int. Cl.: G06F 3/033

(54) **Zweidimensionale Anordnung von Schaltflächen**

(71) Anmelder: SIEMENS AKTIENGESELLSCHAFT, 80333 München (DE)
(72) Erfinder: Kreiner, Georg, 92260 Ammerthal (DE)

(57) **Zusammenfassung**

Die Erfindung betrifft ein Verfahren, ein Computerprogrammprodukt und ein System zur kontextsensitiven Bereitstellung von Programmfunktionen. Um einem Anwender eines Computerprogramms einen schnellen Zugriff auf in einem Arbeitskontext verfügbare Programmbefehle zu ermöglichen, werden folgende Verfahrensschritte vorgeschlagen:
- Ermittlung von in einem aktuellen Arbeitskontext eines Anwenders anwendbaren Programmbefehlen und
- Darstellen von einer Grafik auf einem Bildschirm, innerhalb der die Programmbefehle versinnbildlichende Schaltflächen zweidimensional verteilt angeordnet werden.

## Beschreibung

Die Erfindung betrifft ein Verfahren, ein System und ein Computerprogrammprodukt zur kontextsensitiven Bereitstellung von Programmfunktionen.

Ein derartiges Verfahren, System bzw. Computerprogrammprodukt kommt bei unterschiedlichsten Softwareprogrammen zum Einsatz, bei denen einem Anwender eine von seinem Arbeitskontext abhängige Auswahl von Programmbefehlen zur Verfügung gestellt wird. Beispielhaft sind hier Textverarbeitungsprogramme, Grafikprogramme, Simulationsprogramme, Programmierumgebungen, CAD Programme etc... zu nennen.

Kontextsensitive Programmbefehle werden dem Anwender heute in der Regel in Form einer Liste zur Verfügung gestellt, die über eine Menüleiste in der Benutzeroberfläche geöffnet werden kann. Abhängig vom Arbeitskontext des Anwenders beinhaltet die Liste unterschiedliche Programmbefehle, die je nach Kontextmenü an unterschiedlichen Positionen innerhalb der Liste positioniert sind.

Der Erfindung liegt die Aufgabe zu Grunde, einem Anwender eines Computerprogramms einen schnellen Zugriff auf in einem Arbeitskontext verfügbare Programmbefehle zu ermöglichen.

Diese Aufgabe wird durch ein Verfahren zur kontextsensitiven Bereitstellung von Programmfunktionen innerhalb eines Computerprogramms mit folgenden Verfahrensschritten gelöst:
- Ermittlung von in einem aktuellen Arbeitskontext eines Anwenders anwendbaren Programmbefehlen und
- Darstellen von einer Grafik auf einem Bildschirm, innerhalb der die Programmbefehle versinnbildlichende Schaltflächen zweidimensional verteilt angeordnet werden.

Weiterhin wird diese Aufgabe durch ein Computerprogrammprodukt zur Durchführung eines derartigen Verfahrens gelöst.

Ferner wird die Aufgabe durch ein System zur kontextsensitiven Bereitstellung von Programmfunktionen innerhalb eines Computerprogramms gelöst mit
- einem Speicher, in dem Zuordnungsinformationen über in Arbeitskontexten verfügbare Programmbefehle abgelegt sind,
- einer Verarbeitungseinheit zur Ermittlung von in einem aktuellen Arbeitskontext eines Anwenders anwendbaren Programmbefehlen anhand der Zuordnungsinformationen und zur Generierung einer Grafik, innerhalb der die Programmbefehle versinnbildlichende Schaltflächen zweidimensional verteilt angeordnet sind und
- einem Bildschirm zur Darstellung der Grafik.

Bei der kontextsensitiven Bereitstellung von Programmfunktionen sollen dem Anwender nur die Befehle des Computerprogramms zur Verfügung gestellt werden, die in dem aktuellen Kontext seiner Arbeit auch angewendet werden können. Hierdurch soll vermieden werden, dass der Anwender aus einer Fülle von Programmbefehlen, von denen ein Großteil im aktuellen Kontext seiner Arbeit nicht verwendbar ist, die von ihm benötigten Programmbefehle langwierig suchen muss. In einem ersten Schritt des erfindungsgemäßen Verfahrens werden daher die in dem aktuellen Kontext des Anwenders verfügbaren Programmbefehle ermittelt.

Der Erfindung liegt die Erkenntnis zugrunde, dass die Darstellung dieser anwendbaren Programmbefehle in Form einer Liste, die beispielsweise über eine Menüleiste in der Benutzeroberfläche des Programms geöffnet werden kann, eine nicht sehr übersichtliche Repräsentation der Programmfunktionen darstellt. Eine Repräsentation der Programmbefehle in Form von Schaltflächen - auch Icons genannt - innerhalb der Grafik, wobei die Schaltflächen eine zweidimensionale Anordnung aufweisen, ist hingegen von dem Anwender sehr viel leichter zu überblicken. Darüber hinaus hat die zweidimensionale Anordnung der Schaltflächen den Vorteil, dass die Wege, die der Anwender mit dem Mauszeiger zur Auswahl der Schaltflächen gehen muss, sehr viel kleiner sind als bei einer Anordnung der Programmfunktionen in Form einer Liste. Dies gilt besonders dann, wenn die Grafik rechteckig, insbesondere quadratisch, ist und die Verteilung der Schaltflächen in Form von Zeilen und Spalten innerhalb der Grafik erfolgt. Eine derartige rechteckige bzw. quadratische Anordnung der Schaltflächen innerhalb der Grafik hat neben dem bereits erwähnten Vorteil der kürzeren Mauszeigerwege auch eine größere Übersichtlichkeit zur Folge.

Bei einer alternativen Ausführungsform ist die Grafik rund, insbesondere kreisförmig, und die Verteilung der Schaltflächen konzentrisch. Auch eine solche Anordnung der Schaltflächen innerhalb einer runden Grafik hat besonders kurze Mauzeigerwege zur Folge und ist für den Anwender sehr übersichtlich.

Da der Mensch im Allgemeinen über ein sehr gutes fotografisches Gedächtnis verfügt ist es besonders vorteilhaft, wenn eine in einem ersten und einem zweiten Arbeitskontext verfügbare Schaltfläche in beiden Arbeitskontexten an derselben Stelle innerhalb der Grafik positioniert wird. Auf diese Art und Weise findet Anwender sehr schnell die bereits im ersten Arbeitskontext verwendete Schaltfläche auch im zweiten Arbeitskontext wieder.

Ein Computerprogramm verfügt in der Regel auch über Programmbefehle, die unabhängig von einem speziellen Arbeitskontext des Anwenders stets verfügbar sind. Ein Beispiel für einen solchen Programmbefehl ist der Befehl "Speichern". Derartige kontextunabhängige Programmbefehle werden in der Regel sehr häufig von dem Anwender benötigt. Daher ist es zweckmäßig kontextunabhängig verfügbare Programmbefehle nahe dem Flächenschwerpunkt der Grafik anzuordnen. Auf diese Art und Weise werden auch die Mauszeigerwege, die zur Betätigung der kontextunabhängig verfügbaren Schaltflächen nötig sind, kurz gehalten.

Bei einer vorteilhaften Anwendung ist das Verfahren zur Bereitstellung von Programmfunktionen innerhalb einer Entwicklungsumgebung zur Projektierung von Steuerungen in der Automatisierungstechnik vorgesehen. Beispielsweise handelt es sich bei einer derartigen Entwicklungsumgebung um ein Computerprogramm, mit dem logische Schaltungen in Form von Blockschaltbildern mit einer grafischen Benutzeroberfläche erstellt werden können.

Im Folgenden wird die Erfindung anhand der in den Figuren dargestellten Ausführungsbeispiele näher beschrieben und erläutert. Es zeigen:
- FIG 1: eine Liste kontextabhängig bereitgestellter Programmfunktionen und eine rechteckige Grafik mit zweidimensional verteilt angeordneten Schaltflächen,
- FIG 2: eine runde Grafik mit zweidimensional verteilt angeordneten Schaltflächen,
- FIG 3: eine Anordnung von Schaltflächen in einem ersten Arbeitskontext und
- FIG 4: eine Anordnung von Schaltflächen in einem zweiten Arbeitskontext.

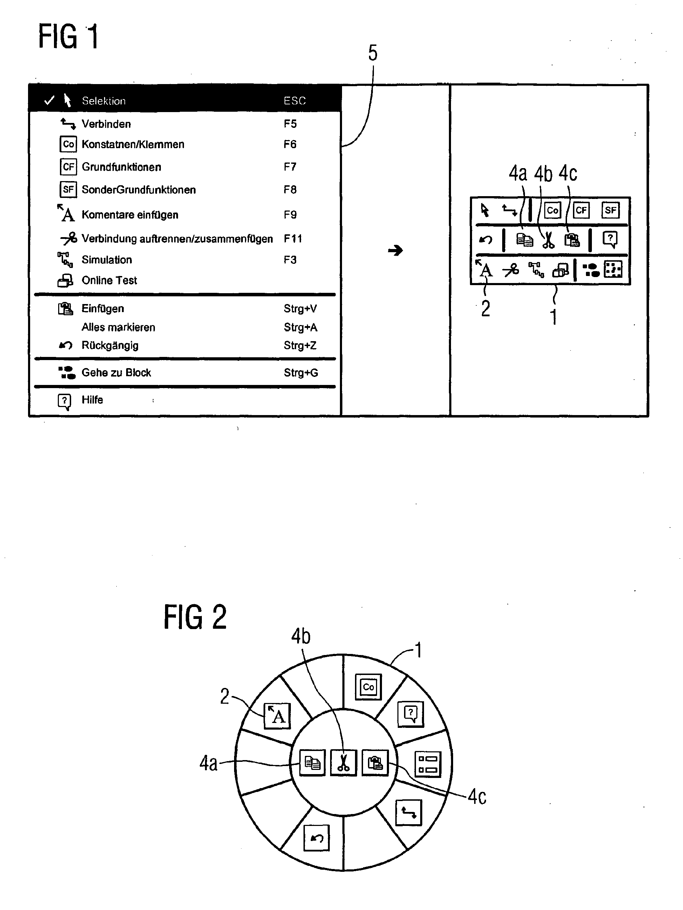

FIG 1 zeigt eine Liste 5 kontextabhängig bereitgestellter Programmfunktionen und eine rechteckige Grafik 1 mit zweidimensional verteilt angeordneten Schaltflächen 2,4a,4b,4c. Die Liste 5 entspricht einer aus dem Stand der Technik bekannten Darstellungsweise, bei der in einem bestimmten Arbeitskontext für einen Anwender bereitgestellte Programmfunktionen über eine Menüleiste abrufbar sind. Die Programmfunktionen werden zuvor in Abhängigkeit des Arbeitskontextes des Anwenders selektiert und innerhalb der Liste vertikal aneinander gereiht. Möchte der Anwender nun eine bestimmte Programmfunktion aktivieren, so ist er im Allgemeinen gezwungen, die Liste von oben nach unten durchzulesen.

Auf der rechten Seite in FIG 1 ist dargestellt, wie die Programmfunktionen durch Schaltflächen, oder auch Icons genannt, innerhalb einer rechteckigen Grafik 1 entsprechend einer Ausführungsform der Erfindung dargestellt werden. Jede im aktuellen Kontext des Anwenders verfügbare Programmfunktion ist durch eine versinnbildliche Schaltfläche 2 dargestellt, die der Anwender insbesondere mit Hilfe des Mauszeigers betätigen kann. Im Zentrum der rechteckigen Grafik 1 befinden sich kontextunabhängig verfügbare Schaltflächen 4a,4b,4c. In dem dargestellten Beispiel versinnbildlichen die kontextunabhängig verfügbaren Schaltflächen 4a,4b,4c die stets verfügbaren Programmfunktionen "Kopieren", "Ausschneiden" und "Einfügen". Da diese Funktionen vom Anwender sehr häufig betätigt werden müssen, sind sie im Zentrum der Grafik 1 angeordnet und somit durch kurze Mauszeigerwege erreichbar.

Die in FIG 1 gezeigte rechteckige Anordnung der verfügbaren Schaltflächen 2,4a,4b,4c hat gegenüber der gemäß dem Stand der Technik bekannten Auflistungen der Programmfunktionen den entscheidenden Vorteil, dass sie durch den Anwender sehr viel schneller überblickt werden kann und die Aktivierung der einzelnen Programmfunktionen mit wesentlich kürzeren Mauszeigerwegen durchgeführt werden kann.

FIG 2 zeigt eine runde Grafik 1 mit zweidimensional verteilt angeordneten Schaltflächen 2,4a,4b,4c. Innerhalb der runden Grafik 1 sind die Schaltflächen 2,4a,4b,4c konzentrisch zur Mitte des Kreises hin angeordnet. Hierdurch werden die Mauszeigerwege zwischen den einzelnen Schaltflächen minimiert, wodurch ein sehr schneller Zugriff des Anwenders auf die einzelnen Schaltflächen 2,4a,4b,4c ermöglicht wird. Auch hier befinden sich wiederum im Zentrum der Grafik 1 kontextunabhängig verwendbare Schaltflächen 4a,4b,4c, die auch in diesem Beispiel wieder die Programmfunktionen "Kopieren", "Ausschneiden" und "Einfügen" repräsentieren.

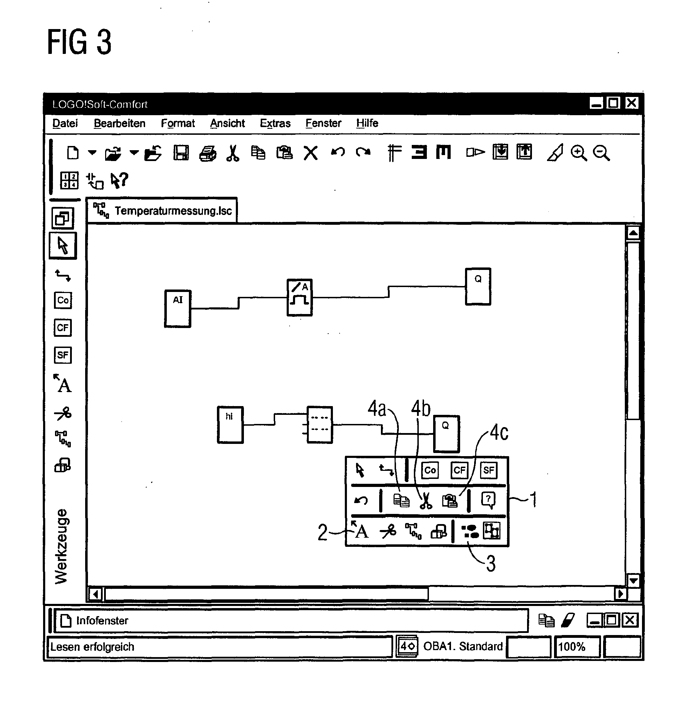

FIG 3 zeigt eine Anordnung von Schaltflächen 2,3,4a,4b,4c in einem ersten Arbeitskontext eines Anwenders. Dargestellt ist eine Bedieneroberfläche einer Entwicklungsumgebung, die zur grafischen Erstellung logischer Schaltungen in Form von Blockschaltbildern vorgesehen ist. Eine derartige Entwicklungsumgebung findet beispielsweise in der Automatisierungstechnik bei der PC-basierten Erstellung von Steuerungsprogrammen Anwendung, die anschließend z.B. auf eine speicherprogrammierbare Steuerung geladen werden.

Die einzelnen Schaltflächen 2,3,4a,4b,4c sind innerhalb einer rechteckigen Grafik 1 angeordnet. Im Zentrum der Grafik 1 befinden sich kontextunabhängig verfügbare Schaltflächen 4a,4b,4c, die auch in diesem Beispiel die Programmfunktionen "Kopieren", "Ausschneiden" und "Einfügen" repräsentieren. Um die kontextunabhängig verfügbaren Schaltflächen 4a,4b,4c herum sind weitere Schaltflächen 2,3 angeordnet, die im ersten Arbeitskontext des Anwenders verfügbar sind.

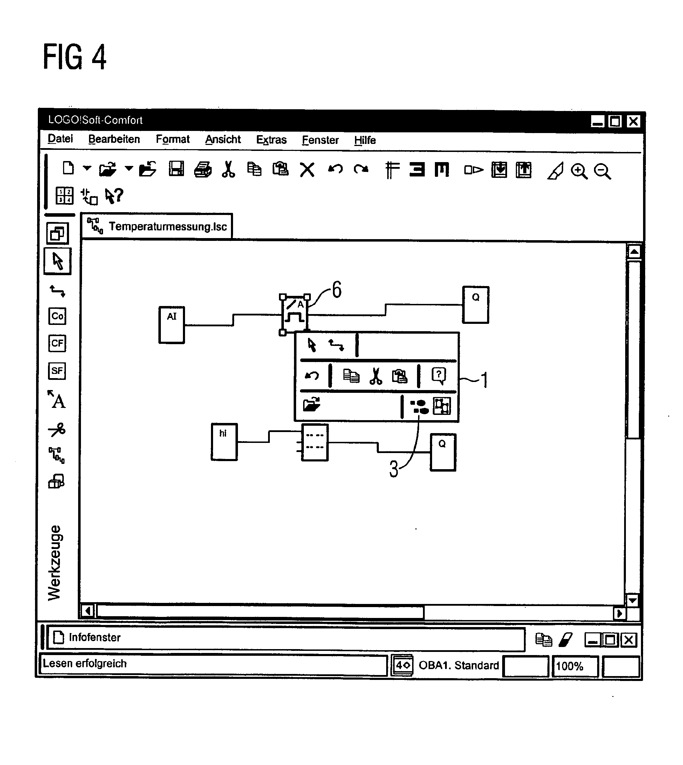

FIG 4 zeigt eine Anordnung von Schaltflächen 3, 4a,4b,4c in einem zweiten Arbeitskontext eines Anwenders. Dargestellt ist die Bedieneroberfläche derselben Entwicklungsumgebung, deren Bedieneroberfläche bereits in FIG 3 dargestellt wurde.

In FIG 4 hat der Anwender beispielsweise mit Hilfe eines Mauszeigers einen Funktionsblock 6 einer am Bildschirm dargestellten logischen Schaltung markiert, die mit Hilfe der Entwicklungsumgebung projektiert wird. Durch das Markieren des Funktionsblockes 6 ist ein neuer Arbeitskontext entstanden. Hierdurch ändern sich auch die Auswahl der dem Anwender zur Verfügung stehenden Befehle und damit auch die Auswahl der innerhalb der Grafik 1 dargestellten Schaltflächen.

Im Zentrum der Grafik 1 sind nach wie vor die kontextunabhängig verfügbaren Schaltflächen 4a,4b,4c für die Befehle "Kopieren", "Ausschneiden" und "Einfügen" dargestellt. Hingegen fehlen in der oberen und in der untersten Zeile der Grafik 1 einige Schaltflächen, die Programmfunktionen darstellen, die in dem durch das Markieren des Funktionsblockes 6 eingeleiteten Arbeitskontext nicht mehr verfügbar sind. Die Schaltflächen, die in beiden Arbeitskontexten verfügbar sind, werden an derselben Position innerhalb der Grafik 1 platziert. Beispielhaft sei hier die sowohl im ersten als auch im zweiten Arbeitskontext verfügbare Schaltfläche 3 mit dem Fußabdrucksymbol genannt. Auf diese Art und Weise wird dem Anwender, der im Allgemeinen über ein gutes fotografisches Gedächtnis verfügt, dass Auffinden der Schaltflächen erleichtert.

## Patentansprüche

1. Verfahren zur kontextsensitiven Bereitstellung von Programmfunktionen innerhalb eines Computerprogramms mit folgenden Verfahrensschritten:
- Ermittlung von in einem aktuellen Arbeitskontext eines Anwenders anwendbaren Programmbefehlen und
- Darstellen von einer Grafik (1) auf einem Bildschirm, innerhalb der die Programmbefehle versinnbildlichende Schaltflächen (2,3,4a,4b,4c) zweidimensional verteilt angeordnet werden.

2. Verfahren nach Anspruch 1,
wobei die Grafik (1) rechteckig, insbesondere quadratisch, ist und die Verteilung der Schaltflächen (2,3, 4a,4b,4c) in Form von Zeilen und Spalten innerhalb der Grafik (1) erfolgt.

3. Verfahren nach Anspruch 2,
wobei die Grafik (1) rund, insbesondere kreisförmig, ist und die Verteilung der Schaltflächen (2,3, 4a,4b,4c) konzentrisch erfolgt.

4. Verfahren nach einem der Ansprüche 1 bis 3,
wobei eine in einem ersten und einem zweiten Arbeitskontext verfügbare Schaltfläche (3) in beiden Arbeitskontexten an dieselbe Stelle innerhalb der Grafik (1) positioniert wird.

5. Verfahren nach einem der vorhergehenden Ansprüche,
wobei kontextunabhängig verfügbare Schaltflächen (4a,4b,4c) nahe dem Flächenschwerpunkt der Grafik angeordnet werden.

6. Verfahren nach einem der vorhergehenden Ansprüche,
wobei das Verfahren zur Bereitstellung von Programmfunktionen innerhalb einer Entwicklungsumgebung zur Projektierung von Steuerungen in der Automatisierungstechnik vorgesehen ist.

7. Computerprogrammprodukt zur Durchführung eines Verfahrens nach einem der Ansprüche 1 bis 6.

8. System zur kontextsensitiven Bereitstellung von Programmfunktionen innerhalb eines Computerprogramms mit
- einem Speicher, in dem Zuordnungsinformationen über in Arbeitskontexten verfügbare Programmbefehle abgelegt sind,
- einer Verarbeitungseinheit zur Ermittlung von in einem aktuellen Arbeitskontext eines Anwenders anwendbaren Programmbefehlen anhand der Zuordnungsinformationen und zur Generierung einer Grafik (1), innerhalb der die Programmbefehle versinnbildlichende Schaltflächen (2,3, 4a,4b,4c) zweidimensional verteilt angeordnet sind und
- einem Bildschirm zur Darstellung der Grafik (1).

9. System nach Anspruch 8,
wobei die Verarbeitungseinheit derart ausgeführt ist, dass die Grafik (1) rechteckig, insbesondere quadratisch, und die Verteilung der Schaltflächen (2,3, 4a,4b,4c) in Form von Zeilen und Spalten innerhalb der Grafik (1) ist.

10. System nach Anspruch 9,
wobei die Verarbeitungseinheit derart ausgeführt ist, dass die Grafik (1) rund, insbesondere kreisförmig, und die Verteilung der Schaltflächen (2,3, 4a,4b,4c) konzentrisch ist.

11. System nach einem der Ansprüche 8 bis 10,
wobei die Verarbeitungseinheit derart ausgeführt ist, dass eine in einem ersten und einem zweiten Arbeitskontext verfügbare Schaltfläche (3) in beiden Arbeitskontexten an dieselbe Stelle innerhalb der Grafik (1) positioniert ist.

12. System nach einem der Ansprüche 8 bis 11,
wobei die Verarbeitungseinheit derart ausgeführt ist, dass kontextunabhängig verfügbare Schaltflächen (4a,4b,4c) nahe dem Flächenschwerpunkt der Grafik (1) angeordnet sind.

13. System nach einem der Ansprüche 8 bis 12,
wobei das System zur Bereitstellung von Programmfunktionen innerhalb einer Entwicklungsumgebung zur Projektierung von Steuerungen in der Automatisierungstechnik vorgesehen ist.
